# EUROPEAN PATENT SPECIFICATION

(11) **EP 2 583 343 B1**
(45) Date of publication and mention of the grant of the patent: **26.03.2014**
(21) Application number: 11730189.5
(22) Date of filing: 26.05.2011
(51) Int. Cl.: H01M 8/24, H01M 8/12, H01M 8/02, H01M 8/04

(54) **FORCE DISTRIBUTOR FOR A FUEL CELL STACK OR AN ELECTROLYSIS CELL STACK**
KRAFTVERTEILER FÜR BRENNSTOFFZELLENSTAPEL ODER ELEKTROLYSEZELLE
RÉPARTITEUR DE FORCE POUR UN EMPILEMENT DE PILES À COMBUSTIBLE OU DE CELLULES ÉLECTROLYTIQUES

(30) Priority: 17.06.2010 DK 201000532
(43) Date of publication of application: 24.04.2013
(73) Proprietor: Topsoe Fuel Cell A/S, 2800 Kongens Lyngby (DK)
(72) Inventor: NIELSEN, Martin, Refslund, DK-3460 Birkerød (DK); HEIREDAL-CLAUSEN, Thomas, DK-2100 Copenhagen Ø (DK)
(86) International application number: PCT/EP2011/002604
(87) International publication number: WO 2011/157351

(56) References cited:
- WO-A2-02/27813
- DE-A1-102006 060 809
- DE-A1-102007 036 642

## Description

The invention relates to compression of cell stacks, more specifically to a force distributor for fuel cell stacks or electrolysis cell stacks in particular for Solid Oxide Fuel Cell (SOFC) stacks or Solid Oxide Electrolysis Cell stacks (SOEC).

In the following the invention will be explained in relation to SOFC stacks. The force distributor according to the invention can however, also be used for other types of fuel cells such as Polymer Electrolyte Fuel cells (PEM), Molten Carbonate Fuel Cells (MCFC) or Direct Methanol Fuel Cells (DMFC). Further, the invention can also be used for electrolysis cells such as Solid Oxide Electrolysis Cells and such cell stacks.

The electro-chemical reactions and the function of a fuel cell or an electrolysis cell is not the essence of the present invention, thus this will not be explained in detail, but considered known for a person skilled in the art.

To increase the voltage produced by the SOFC, several cell units are assembled to form a stack and are linked together by interconnects. These layers of the stack are sealed together with a gas tight and temperature resistant seal such as glass along some or all edges. The interconnects serve as a gas barrier to separate the anode (fuel) and cathode (air/oxygen) sides of adjacent cell units, and at the same time they enable current conduction between the adjacent cells, i.e. between an anode of one cell with a surplus of electrons and a cathode of a neighbouring cell needing electrons for the reduction process. The current conduction between neighbouring electrodes through the interconnect separating the electrodes, is enabled via a plurality of contact points throughout the area of the interconnect. The contact points can be formed as protrusions on both sides of the interconnect. The efficiency of the fuel cell stack is dependant of good contact in these points, and therefore it is crucial that a suitable compression force is applied to the fuel cell stack. This compression force must be large enough and evenly distributed throughout the area of the fuel cell to ensure electrical contact, but not so large that it damages the electrolyte, the electrodes, the interconnect or impedes the gas flow over the fuel cell. The compression of the fuel cell is also vital for the seal between the layers of the stack to keep the stack gas tight. Further, different areas of the cell stack may require different compression forces, the electro-chemical active area of the cell stack may require a lower compression force than the sealing areas. Hence, not only must the compression force be evenly distributed over some areas, there can also be a need to tailor the compression force such that a compression force of a first magnitude is evenly applied to some surface areas of the cell stack, but a compression force of a second, third and more magnitudes is evenly applied to other surface areas of the cell stack according to the specific compression requirements of the area in question.

A solution to this problem has been proposed in WO 2008089977 describing how the fuel cell stack has thermally insulating end blocks having one rectangular planar side facing the stack and an opposing side of convex shape. Springs tighten a flexible sheet against the convex shaped face of the end blocks, whereby the spring force is evenly distributed over the stack end areas.

In DE 10250345 a housing surrounding a SOFC is provided and a compressible mat between the stack and the housing provides a compression force to the cells both radially and axially.

WO 2005045982 describes how a multi-function end plate assembly may be used to preferentially compress a region of the fuel cell stack.

In WO 2008003286 a stack is compressed by thermally insulating elements, which are pressed against the stack by an elastic sleeve. The sleeve can for instance be made of silicone or natural caoutchouc.

Yet another stack compression principle is shown in DE 19645111.

The presented known art disclose solutions to compression problems of a fuel cell stack. They address the problems of force providing, but not force distribution as does the present invention. Accordingly all of them have some of the inherent problems:
- It is difficult and expensive to produce force providing endplates without roughness; hence the roughness entails compression force concentration in delimited areas of the stack with the risk of damaging the stack or reducing the performance of the stack.
- It is expensive to produce force providing endplates which are sufficiently plane to provide an even compression force to the stack. Even if the endplate is sufficiently plane, unevenness can occur during operation and start/stop periods due to the changing conditions of especially temperature and pressure. Unevenness can lead to damage or performance reduction of the stack as can roughness as well as roughness and unevenness combined which often occurs.
- To achieve the necessary stiffness of known art endplates they need to be manufactured in sturdy material, which makes them large, heavy and expensive.
- The fuel- or electrolysis cells near the ends of a cell stack will brake if critically large point forces concentrated in local areas of the cell stack end surface occurs, this entails large demands for geometrical tolerances, stiffness and purity of known art endplates.
- A single unit known art end plate can not apply forces of different magnitude to different areas of the cell stack end surface, hence the compression force can not be tailored to the different requirements of different areas of the cell stack.
- Large endplates have slow thermal response which is a problem when operation parameters are changed and adjusted.

It is an object of the present invention to solve the mentioned problems by providing a cell stack comprising a new force distributor.

More specifically, it is an object of the invention to provide a cell stack comprising a force distributor which compensates for any impurities, roughness, lacking flatness and lacking stiffness of the force provider.

An object of the invention is also to provide a cell stack comprising a force distributor which allows the force provider to be less heavy, voluminous and expensive.

It is a further object of the invention to provide a cell stack comprising a force-distributor which protects the components of a cell stack against damage.

It is further an object of the invention to provide a cell stack comprising a force distributor which provides an evenly distributed compression force from a force provider to a cell stack.

It is yet a further object of the invention to provide a cell stack comprising a force distributor which tailors the compression force to the requirements of local surface areas of a cell stack.

A further object of the invention is to provide a cell stack comprising a force distributor which enables a cell stack assembly to have quick thermal response relative to state of the art, heavy endplate cell stacks.

A further object of the invention is to provide a cell stack comprising a force distributor which integrates the sealing of a side gas manifold to at least a part of the force distributor.

A further object of the invention is to provide a cell stack comprising a force distributor which provides vibration damping and protection of a cell stack.

These and other objects are achieved by the invention as described below.

According to the above objectives of the invention a cell stack comprising a force distributor is provided. The force distributor is located on at least one end of the cell stack in-between the end face of the cell stack and an end plate which serves as a force provider, providing compression force to the cell stack. The force provider can have a range of forms such as tightening rods in connection with flat steel end plates, it can be in the form of a frame compressing one or more stacks, it can be a manifold or tightening clamps, another adjacent stack, another adjacent force distributor etc. The force provider is defined as anything providing compression force for the cell stack.

The force distributor can be located at both ends of the cell stack: between a bottom end plate and the bottom end of the stack and between a top end plate and the top end of the stack. It is also possible to locate the force distributor within the stack between separate cells of the stack or to combine having the force distributor located on one or two ends of the cell stack as well as on one or more positions within the cell stack. In some embodiments the force distributor itself serves as an end plate to the cell stack, which means the end plate and the force distributor can be one integral unit. For example, the force distributor can have a flat face oriented towards the cell stack and a convex opposite face in connection with force providing tightening clamps or a force providing flexible mat surrounded by a sheet of for instance steel.

The force distributor comprises an at least partially flexible plate or body, optionally with protruding contact areas on at least the face of the plate oriented towards the cell stack. The necessity of the protruding contact areas depends on the partial flexibility of the force distributor. They are necessary if the force distributor face oriented towards the cell stack is so flexible that the force would otherwise be distributed to areas with gas flow channels with the risk of clogging of the gas channels and damage to the cell parts. Flexible is defined as having an E-module less than the E-module of the force provider of the cell stack. The E-module relates in this context to the entire flexible part of the plate, not to the flexible materials components themselves which individually seen as particles can have larger E-modules.

The force distributor can in one embodiment comprise at least two layers, a first layer which is flexible and a second layer which is rigid. Flexible is defined as above and rigid as having a higher E-module than the flexible layer as a whole. The flexible layer faces the force provider. The surface of the force provider, which faces the force distributor (and further on faces the cell stack) is ideally a plane surface. However the force provider is manufactured with geometrical tolerances, which entails deviation from the absolute ideal plane surface. Also roughness, impurities and deflection of the force provider due to thermo-mechanical tensions or uneven force transmitting, results in deviation from the ideal plane surface of the force provider. Also vibrations from the force provider or physical movements in any directions for instance due to thermo mechanical tensions in the force providing structure poses potentially critical problems for the cell stack. The flexible layer of the force distributor is able to absorb these deviations, vibrations and movements, and thus receive the relative unevenly distributed compression force from the force provider and transmit it further on to the second rigid layer as a relative more evenly distributed compression force. The second rigid layer of the force distributor passes the compression force on to the cell stack. The face of the second layer of the force distributor which faces the cell stack can be a plane surface. Because of the limited thickness of the second layer it is possible to manufacture the second layer with a face with more narrow geometrical tolerances. Also thermo-mechanical tensions are less in the thin second layer of the force distributor than in conventional thick endplates. But preferably the face of the force distributor which faces the cell stack comprises protruding contact areas to transmit the compression force, thus tailoring the compression force to the requirements of the cell stack.

In an embodiment of the invention, the first layer of the force distributor can be integral with or serve as an endplate as explained above, which can reduce manufacturing and handling costs. In another embodiment of the invention, the first layer of the force distributor can be integral with the second layer of the force distributor.

In a further embodiment of the invention, the face towards the cell stack of the force distributor second layer can comprise protruding force distributor contact areas. In this embodiment, the compression force will only be distributed to the underlying cell stack at areas with protruding contact areas. Thus, the compression force can be omitted in some areas, such as reaction gas flow channel areas in the cell stack, whereas seal areas and the interconnect contact areas will receive a compression force. The protruding contact areas can even vary in area and height to tailor the compression force to certain areas of the underlying cell stack. E. g. the protruding areas can have a larger area and protrude more where the underlying cell stack has seal areas.

In a further embodiment of the invention, the face towards the force provider of the force distributor second layer can comprise protruding force distributor contact areas. On this face of the force distributor the design of the surface can also be tailored to the compression requirements of the cell stack, because it is possible to vary the relative height of the protruding force distributor contact areas. Accordingly, the seal areas which typically require the largest compression force can receive a larger compression force than the cell stack contact points, by making the corresponding contact areas of the force distributor areas above the sealing areas higher than the force distributor areas above the contact areas of the cell stack. Highest compression force will be distributed from the first flexible layer of the force distributor to the second rigid layer in areas where the protruding contact areas are highest, because those areas will give the highest local compression of the first layer.

A further embodiment of the invention combines the two aforementioned embodiments into a force distributor with protruding force distributor contact areas on both faces of the second rigid layer. The space which forms between the protruding contact areas in any of the embodiments having such protruding areas can be adapted to correspond to gas flow channels of the interconnects, which ensures these gas flow channels are not impeded. Also, said spaces can be adapted to contain sensors, cooling or heating channels.

In one embodiment of the invention, the second layer of the force distributor can be electrically conducting, whereby components and costs can be saved as the current collector plate of the cell stack can be omitted or supported. In case this embodiment is cooperated with the embodiment where the first layer of the force distributor is integrated with the pressure plate, the advantages of the force distributor can be achieved without a greater number of components than in a conventional cell stack.

The first force distributor layer can be made of calcium silicate, micro porous insulation, mica, metal or a fibre mat. The first force distributor layer is flexible, but further the material characteristics of this layer can also be utilised to provide vibration damping of the cell stack and sealing of a reaction gas side manifold to the cell stack. The second force distributor layer can be made of metal alloy or ceramic or other known suitable materials.
1. Force distributor for at least one cell stack, said cell stack comprises
   - a plurality of fuel cells or electrolysis cells,
   - at least one interconnect plate comprising protruding contact areas,
   - a cell stack top face,
   - a cell stack bottom face,
   - at least one cell stack side face,
   - at least one force provider
   wherein said force distributor comprises an at least partially flexible body with the flexible part oriented towards the at least one force provider.
2. Force distributor according to feature 1, wherein the at least partially flexible body comprises protruding contact areas on at least the face of the plate oriented towards the cell stack.
3. Force distributor according to any of the preceding features, wherein said force distributor comprises a convex face oriented towards the force provider.
4. Force distributor according to any of the preceding features, wherein said force distributor comprises a first and a second force distributor layer, each layer has a first and a second force distributor face, said first force distributor layer is a flexible layer and said second force distributor layer is a rigid layer.
5. Force distributor according to any of the preceding features, wherein said first force distributor layer has an E-module which is higher than the E-module of the force provider.
6. Force distributor according to any of the preceding features, wherein said force distributor is located on at least one of the following positions: between said cell stack top face and said at least one force provider or between said cell stack bottom face and said at least one force provider, and said force distributor is positioned with the second force distributor layer facing the cell stack.
7. Force distributor according to any of the preceding features, wherein at least one of said force distributor is located within said cell stack.
8. Force distributor according to any of the preceding features, wherein said at least one force provider is integral with the first force distributor layer.
9. Force distributor according to any of the preceding features, wherein the protruding contact areas corresponds at least one of: the sealing areas of the cell stack or the interconnect contact areas.
10. Force distributor according to any of the preceding features, wherein at least one of the spaces formed between said protruding contact areas is adapted to contain sensors.
11. Force distributor according to any of the preceding features, wherein at least one of the spaces formed between said protruding contact areas is adapted to form cooling or heating channels.
12. Force distributor according to any of the preceding features, wherein said second force distributor layer is electrically conducting.
13. Force distributor according to any of the preceding features, wherein the force distributor comprises at least one of: calcium silicate, micro porous insulation, mica, metal, a fibre mat, refractory ceramic fibre or glass fibre, magnesia-silica fibre, alumina fibre containing an amount of silica, low alkali aluminosilicate compositions containing one or more of the following oxides: zirconia, chromia or titania or vermiculite.
14. Force distributor according to any of the preceding features, wherein the force distributor comprises at least one of: metal alloy or ceramic.
15. Force distributor according to any of the preceding features, wherein at least a part of said force distributor forms a seal between said cell stack and at least one of: a side inlet gas manifold or a side outlet gas manifold.
16. A Cell stack comprising at least one force distributor according to any of the preceding features, wherein said cell stack is a Solid Oxide Fuel Cell stack or a Solid Oxide Electrolysis Cell stack.

The invention is further illustrated by the accompanying drawings showing examples of embodiments of the invention.
Fig. 1 shows a side view of a cell stack assembly comprising a force distributor according to a first embodiment of the invention.
Fig. 2 shows a side view of a cell stack assembly comprising a force distributor according to a second embodiment of the invention.
Fig. 3 shows a side view of a cell stack assembly comprising a force distributor according to a third embodiment of the invention.
Fig. 4A shows cut side view of the second force distributor layer according to an embodiment of the invention.
Fig. 4B shows a face view of the second force distributor layer according to an embodiment of the invention.
Fig. 5 shows a detailed view of a part of a force distributor and a force provider according to an embodiment of the invention.
Fig. 6 shows a top part of a cell stack comprising a force distributor according to an embodiment of the invention.
Fig. 7 shows a side view of a cell stack assembly comprising a force distributor according to a further embodiment of the invention.
Fig. 8 shows a side view of a cell stack assembly comprising a force distributor according to yet a further embodiment of the invention.
Fig. 9 shows a side view of a cell stack assembly according to prior art.
Fig. 10 shows a side view of a cell stack assembly according to prior art.

### Position number overview:

- 101, 201, 301, 501, 601, 701, 801, 901, 1001:: Force provider
- 102, 202, 302, 502, 602 702, 802:: First force distributor layer, flexible.
- 103, 203, 303, 403, 503, 603, 703, 803:: Second force distributor layer, rigid.
- 104, 204, 304, 504, 704, 804, 904, 1004:: Cell stack.
- 605:: Current collector plate.
- 606:: Cell.
- 607:: Interconnect.
- 808:: Perforations in force distributor.

In the Figs. explained below, the details of roughness and deviation from the plane surface (unevenness) is somewhat exaggerated for the sake of understanding.

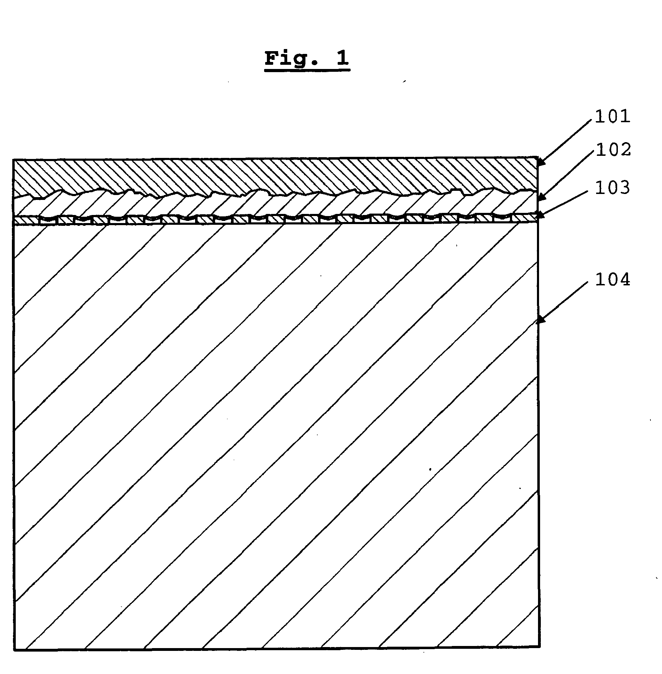

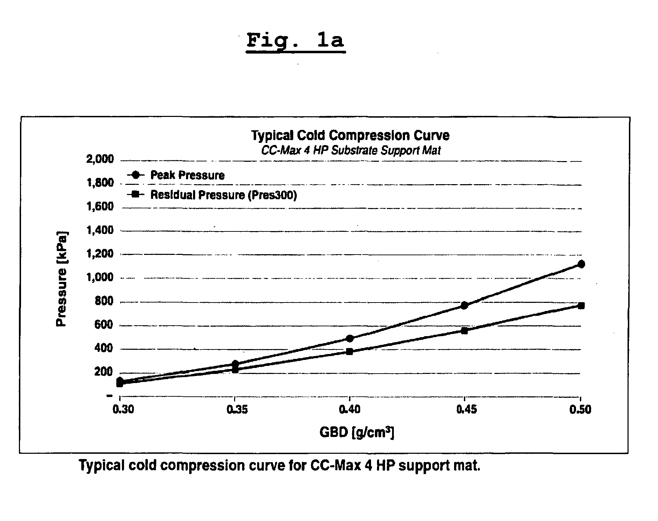

Referring to Fig.1, in one embodiment the cell stack 104 to be compressed is box-shaped. In the Figure, the cell stack is shown as a whole without details of the individual components such as interconnects, electrodes and electrolytes, further, Fig.1 only shows application of the invention to the top of the stack, a similar system, not shown, can optionally be applied to the bottom of the stack. To apply a compression force to the cell stack, a force provider 101 is positioned on top of the cell stack. In known art, this force provider presses directly to the uppermost component of the cell stack, such as a current collector plate. However, according to the present invention, a force distributor is positioned between the force provider and the cell stack. The force distributor according to the present invention comprises two layers, a first force distributor layer 102 which is flexible and a second force distributor layer 103 which is rigid. As shown, the flexible first force distributor layer faces the force provider and compensates its possible irregularities in geometrical tolerances, stiffness, purity and possible thermomechanical tensions. As can be seen in the Figure, impurities and irregularities in the face of the force provider facing the stack is absorbed by the flexible first force distributor layer. The rigid second force distributor layer faces the cell stack. In the embodiment shown in Fig.1, the second force distributor layer has protruding areas facing the cell stack, which corresponds the sealing surfaces (not shown) of the cell stack and the contact points (not shown) of the interconnects. Hence, the force distributor is able not only to even out any irregularities in the force providers force surface pressure, but also to tailor the force distribution according to the requirements of the cell stack: relative high pressure on especially sealing surfaces and also on contact points, and no or relative low pressure on areas above gas distribution channels.

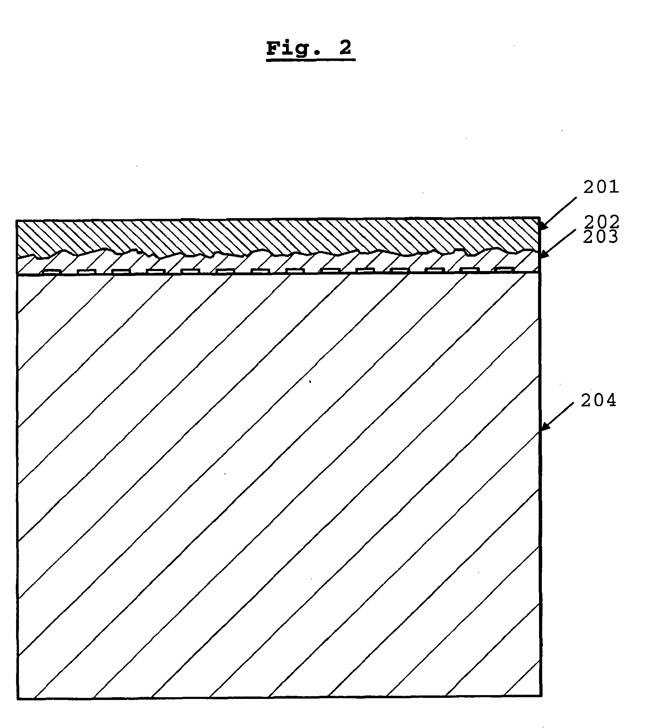

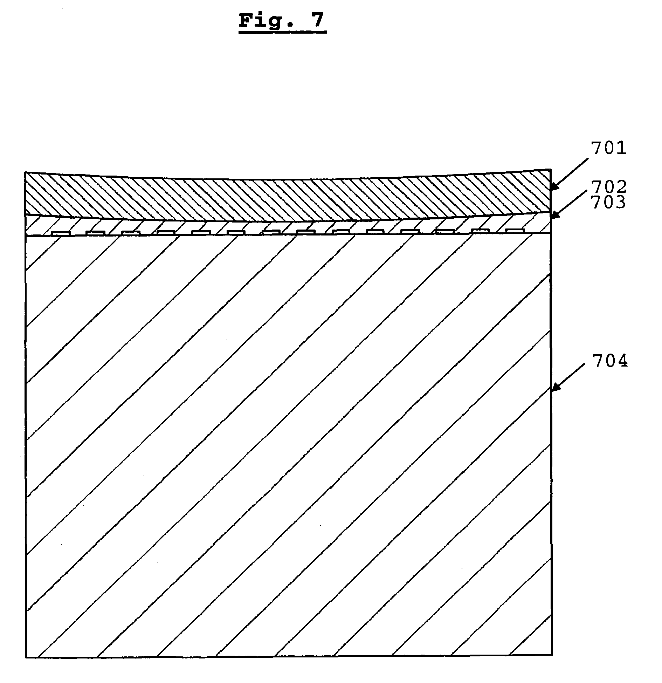

In Fig.2, an embodiment of the invention where the first force distributor layer 202 and the second force distributor layer 203 is one integrated unit. Accordingly, a further embodiment (not shown) is where the first force distributor layer and the force provider 201 is one integrated unit. For the sake of explaining and simplicity, Fig. 2 especially shows how the force distributor compensates the roughness of the force provider. A related embodiment is shown in Fig. 7, where also the first force distributor layer 702 and the second force distributor layer 703 is one integrated unit. The embodiment of Fig. 7 especially shows how the force distributor compensates for the end surface of the force providers deviation from a plane surface, as it can be seen in the Figure that the end surface of the force provider is slightly curved. It is to be understood that in many cases, the force distributor compensates both roughness and unevenness of the force provider i.e. a combination of the embodiment of Figs. 2 and 7.

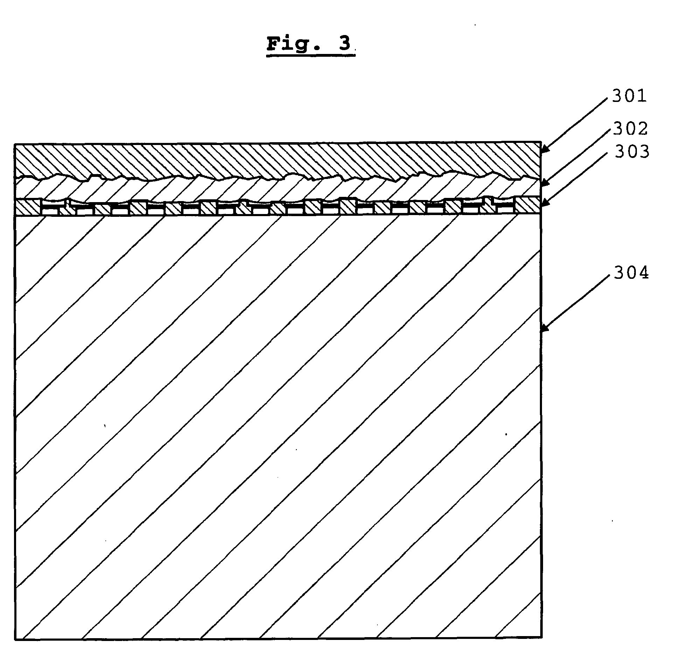

A further embodiment is shown in Fig. 3. Here the second force distributor layer 303 has protruding areas not only on the face towards the cell stack, but also on the face towards the first force distributor layer 302. Relative to the embodiments shown in Fig. 1, this embodiment provides even larger distinction between the force provided on sealing areas and contact points contra the force provided on gas flow channels with the same flexibility of the first force distributor layer. Further, the embodiment shown in Fig. 3 enables the force distribution to be even more distinctly tailored to the requirements of the underlying cell stack: the height of the protruding areas on the face of the second force distributor layer towards the first force distributor layer can be varied independently of each others. For instance the protruding areas above the sealing areas can have a larger height than the height of the protruding areas above the contact points, thereby providing a relative larger sealing area compression force than the compression force of the active area of the cells. This is possible because where the protruding areas of the second force distributor layer face towards the cell stack forming the contact area towards the cell stack has to form a plane surface to avoid damage of the cell stack components; the protruding areas of the second force distributor layer face towards the first force distributor layer can have unequal heights because these unequal heights are essentially absorbed by the flexible layer which results in higher local compression force in those areas. In this context it is important to remember that the terms "flexible" and "rigid" relating to the first and second force distributor layers are relative terms. The rigid layer is rigid compared to the flexible layer, but not absolutely rigid. The rigid layer is able to flex insignificantly which makes it able to transfer the different local compression forces from the flexible layer to different local compression forces on the cell stack end surface, but rigid enough not to keep an essentially plane surface towards the cell stack and thereby avoid damage and crack of the cell stack components.

In a further embodiment (not shown) the face of the second force distributor layer towards the cell stack can be plane, i.e. without protruding areas whereas the face towards the first force distributor layer can have protruding areas similar to the embodiment shown in Fig. 3. This is the opposite situation as the embodiment shown in Fig. 1. It has the advantages of enabling different local compression forces to the cell stack but keeping a plane surface towards the fragile plane cell stack components, thereby further minimizing the risk of damaging the cell stack components.

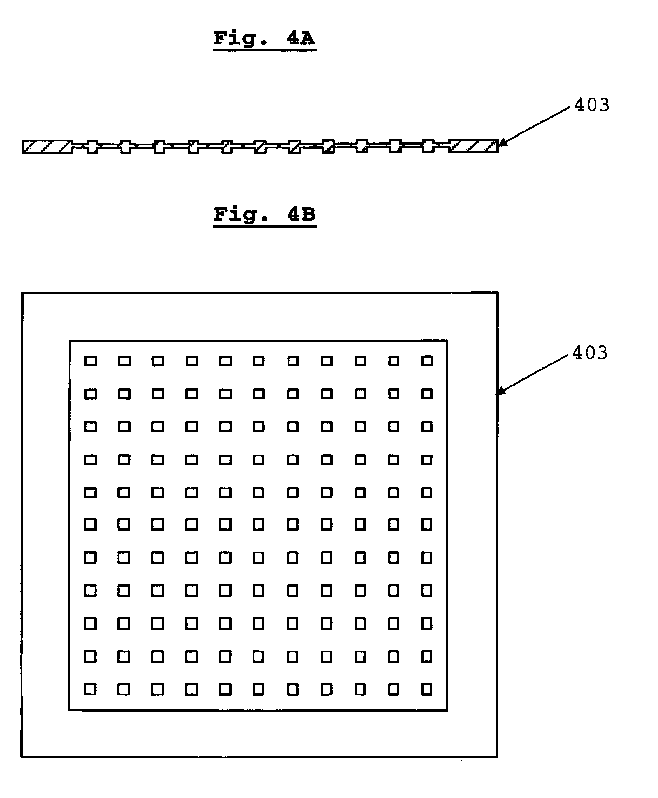

Fig. 4 shows in greater detail a second force distributor layer 403 according to the embodiment of the invention shown in Fig. 3. Both faces of the second force distributor layer has protruding areas, a larger continuous protruding area corresponding to the sealing area of the cell stack and a number of discrete protruding areas corresponding the contact points of the interconnects of the cell stack.

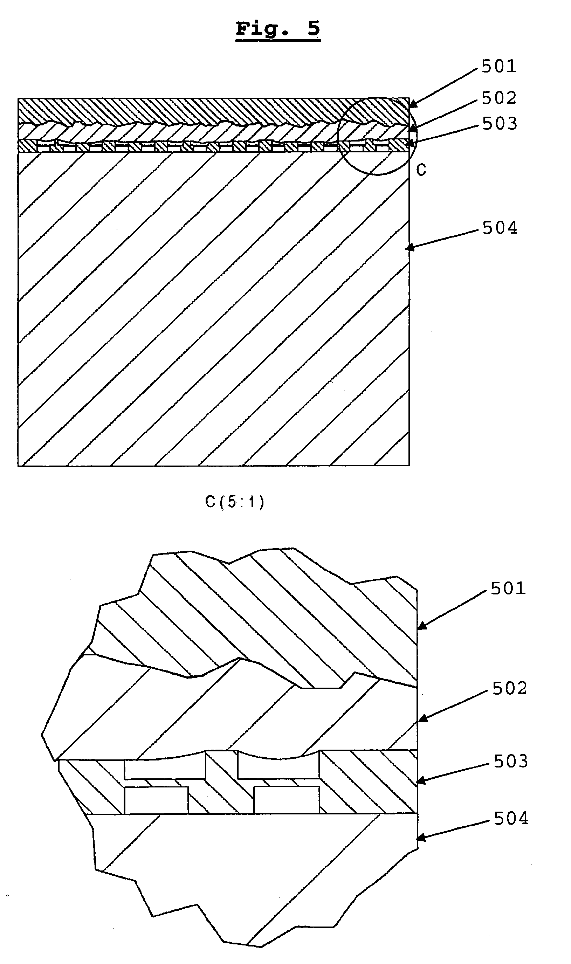

In Fig. 5 a cut in greater detail of the assembly of the force provider 501, the first force distributor layer 502 and the second force distributor layer 503 is shown which corresponds to the embodiment of the invention shown in Fig. 3. The first force distributor layer adapts the surface of the force provider on one face and flexes on the other face on the impact of the protruding areas of the second force distributor layer which induces larger local compression force on the protruding areas than on the not protruding areas.

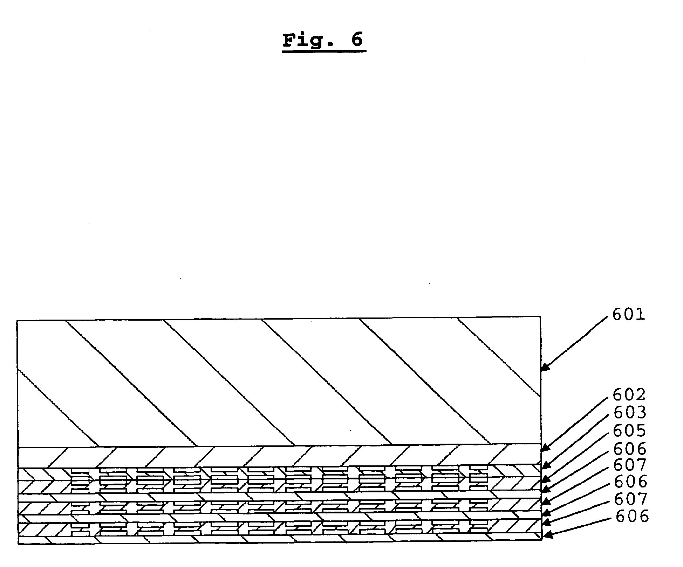

In Fig. 6, a top part of a cell stack, comprising cells 606, interconnects 607 a current collector plate 605, force distributor with first and second layer 602, 603 and a force provider 601. For simplicity, the flexible first force distributor layer is shown without deformation corresponding to a situation where no force is applied to the stack. In this Figure it is however clear how the protruding areas on both faces of the second force distributor layer corresponds exactly to the protruding areas of the current collector plate and the interconnects. It is understood that for simplicity, cf. Fig. 6 only shows a top part of a cell stack, further cells and interconnects can be provided to the cell stack as well as current collector plate, force distributor and force provider on the other end of the cell stack.

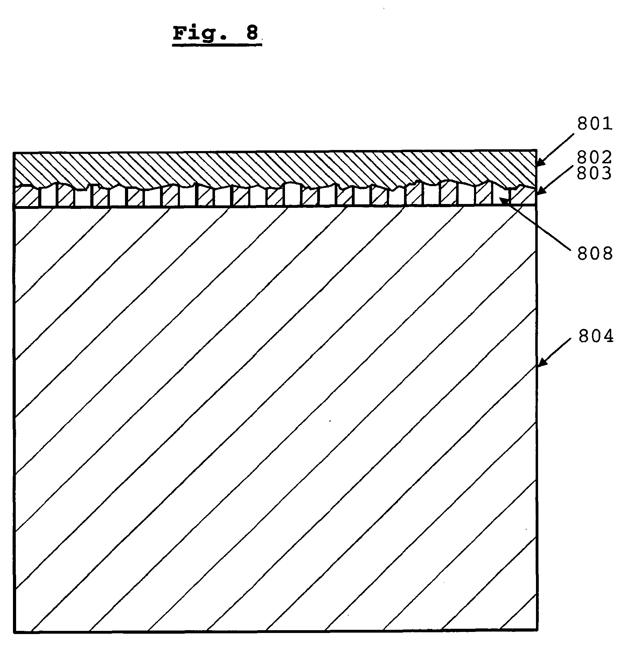

In Fig. 8 an embodiment is shown, where the protruding areas of the force distributor 802, 803 is formed by removing the areas between the protruding areas. It is shown how the force distributor is perforated 808 in the areas without protrusions. As can be seen in Fig. 8, this embodiment integrates the flexible 802 and the rigid 803 layers of the force distributor.

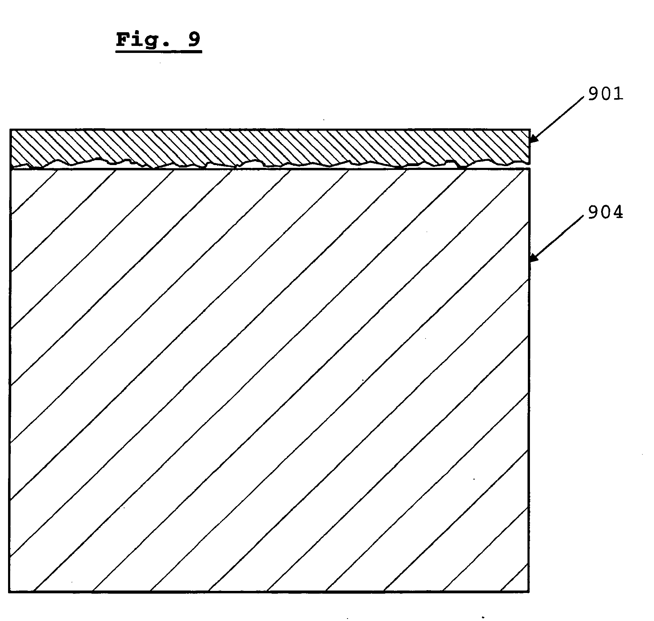

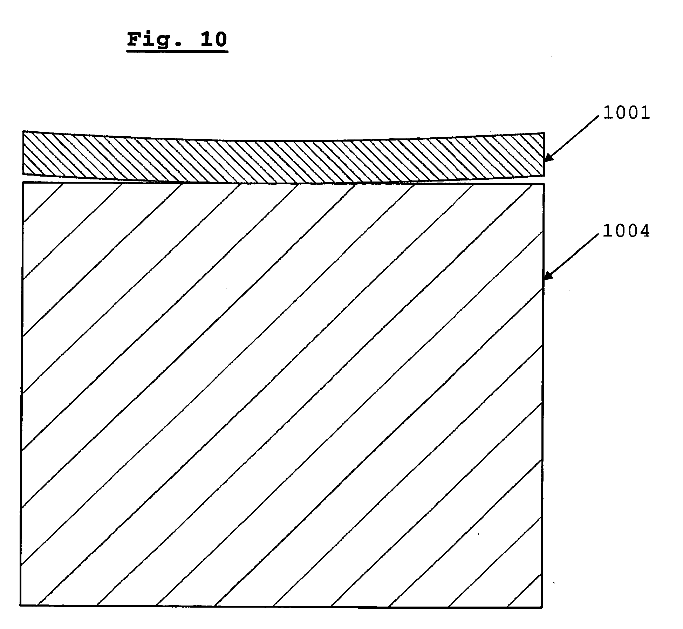

Figs.9 and 10 both show prior art. The roughness of the force provider 901 and the unevenness of the force provider 1001 is transferred to the elements of the cell stack 904, 1004. It is known from state of the art cell stacks how this can lead to damage, occlusion and other problems as already discussed.

### Examples

**For first (flexible) layer of the force distributor:**

### Example 1:

Fibre mats known as "catalytic converter mats". E.G. refractory ceramic fibre or glass fibre, preferably magnesia-silica fibre, alumina fibre containing an amount of silica, low alkali aluminosilicate compositions containing one or more of the following oxides: zirconia, chromia or titania or vermiculite.

"CC-Max® 4 HP substrate support mat from Unifrax" is an example of a suitable commercial mat. The elasticity of the mat is described in Fig. 1a.

### Example 2:

Porous material made of calcium silicate which has an E-module of approximately 10 GPa or porous material made of exfoliated vermiculite.

### Example 3:

High temperature gasket materials. Gaskets materials can be based on vermiculite, mica, mineral wool, woolastonite, calcium silicate, or other or a mixture of several of the mentioned.

**For second (rigid) layer of the force distributor:**

### Example 4:

An example for the rigid part is a ferritic steel with an E-modulus of around 140 GPa and a thermal expansion coefficient which matches the stack's thermal expansion coefficient.

## Claims

1. A cell stack comprising at least one force distributor, said cell stack is a Solid Oxide Fuel Cell stack or a Solid Oxide Electrolysis Cell stack, and said cell stack comprises
• a plurality of fuel cells or electrolysis cells,
• at least one interconnect plate comprising protruding contact areas,
• a cell stack top face,
• a cell stack bottom face,
• at least one force provider,
wherein said force distributor comprises a first and a second force distributor layer, each layer has a first and a second force distributor face, said first force distributor layer is a flexible layer with an E-module less than the E-module of the force provider and said second force distributor layer is a rigid layer with an E-module higher than the flexible layer, the first force distributor layer is oriented towards the at least one force provider, wherein said force distributor is located on at least one of the following positions: between said cell stack top face and said at least one force provider or between said cell stack bottom face and said at least one force provider and the second force distributor layer comprises protruding contact areas on at least the face of the second force distributor layer oriented towards the cell stack.

2. A cell stack according to claim 1, wherein the E-module of the first force distributor layer is approximately 10 GPa.

3. A cell stack according to any of the preceding claims, wherein the E-module of the second force distributor layer is around 140 GPa.

4. A cell stack according to any of the preceding claims, wherein said at least one force provider is integral with the first force distributor layer.

5. A cell stack according to any of the preceding claims, wherein the protruding contact areas corresponds at least one of: the sealing areas of the cell stack or the interconnect contact areas.

6. A cell stack according to any of the preceding claims, wherein said second force distributor layer is electrically conducting.

7. A cell stack according to any of the preceding claims, wherein the force distributor comprises at least one of: calcium silicate, micro porous insulation, mica, metal, a fibre mat, refractory ceramic fibre or glass fibre, magnesia-silica fibre, alumina fibre containing an amount of silica, low alkali aluminosilicate compositions containing one or more of the following oxides: zirconia, chromia or titania or vermiculite.

8. A cell stack according to any of the preceding claims, wherein the force distributor comprises at least one of: metal alloy or ceramic.

9. A cell stack according to any of the preceding claims, wherein at least a part of said force distributor forms a seal between said cell stack and at least one of: a side inlet gas manifold or a side outlet gas manifold.

## Patentansprüche

1. Zellenstapel umfassend mindestens einen Kraftverteiler, wobei der Zellenstapel ein Festoxid-Brennstoffzellenstapel oder ein Festoxid-Elektrolysezellenstapel ist, und der Zellenstapel
• eine Mehrzahl von Brennstoffzellen oder Elektrolysezellen,
• wenigstens eine Verbindungsplatte umfassend hervorstehende Kontaktflächen,
• eine Zellenstapel-Oberseite,
• eine Zellenstapel-Bodenfläche,
• mindestens eine Kraftquelle
umfasst, wobei der Kraftverteiler eine erste und eine zweite Kraftverteilerschicht umfasst, jede Schicht eine erste und eine zweite Kraftverteilerfläche aufweist, die erste Kraftverteilerschicht eine flexible Schicht ist, mit einem E-Modul, das geringer ist als das E-Modul der Kraftquelle, und die zweite Kraftverteilerschicht eine starre Schicht ist, mit einem E-Modul, das höher ist als das der flexiblen Schicht, die erste Kraftverteilerschicht auf zumindest eine Kraftquelle ausgerichtet ist, wobei der Kraftverteiler an wenigstens einer der folgenden Positionen angeordnet ist: zwischen der Zellenstapel-Oberseite und mindestens einer Kraftquelle oder zwischen der Zellenstapel-Bodenfläche und mindestens einer Kraftquelle und die zweite Kraftverteilerschicht umfasst hervorstehende Kontaktflächen zumindest auf der Fläche der zweiten Kraftverteilerschicht, die auf den Zellenstapel ausgerichtet ist.

2. Zellenstapel gemäß Anspruch 1, wobei das E-Modul der ersten Kraftverteilerschicht etwa 10 GPa beträgt.

3. Zellenstapel gemäß einem der vorangehenden Ansprüche, wobei das E-Modul der zweiten Kraftverteilerschicht um die 140 GPa beträgt.

4. Zellenstapel gemäß einem der vorangehenden Ansprüche, wobei die mindestens eine Kraftquelle mit der ersten Kraftverteilerschicht verblockt ist.

5. Zellenstapel gemäß einem der vorangehenden Ansprüche, wobei die hervorstehenden Kontaktflächen wenigstens einem von: Dichtungsflächen des Zellenstapels oder Verbindungsflächen entsprechen.

6. Zellenstapel gemäß einem der vorangehenden Ansprüche, wobei die zweite Kraftverteilerschicht elektrisch leitend ist.

7. Zellenstapel gemäß einem der vorangehenden Ansprüche, wobei der Kraftverteiler mindestens eines von: Calciumsilikat, mikroporöse Isolierung, Glimmer, Metall, eine Fasermatte, feuerfeste Keramikfaser oder Glasfaser, Magnesiumoxid-Siliziumdioxid-Faser, Aluminiumoxidfaser enthaltend eine Menge an Siliciumdioxid, Aluminiumsilikatzusammensetzungen mit geringem Alkaligehalt enthaltend eines oder mehrere der folgenden Oxide: Zirkoniumoxid, Chromoxid oder Titanoxid oder Vermiculit, umfasst.

8. Zellenstapel gemäß einem der vorangehenden Ansprüche, wobei der Kraftverteiler zumindest eines von: Metalllegierung oder Keramik umfasst.

9. Zellenstapel gemäß einem der vorangehenden Ansprüche, wobei zumindest ein Teil des Kraftverteilers eine Abdichtung zwischen dem Zellenstapel und mindestens einem von: einem Seiteneinlassgasverteiler oder einem Seitenabzuggasverteiler bildet.

## Revendications

1. Empilement de piles comprenant au moins un répartiteur de force, ledit empilement de piles étant un empilement de piles à combustible à oxyde solide ou un empilement de cellules d'électrolyse à oxyde solide, et ledit empilement de piles comprenant
• une pluralité de piles à combustible ou de cellules d'électrolyse,
• au moins une plaque d'interconnexion comprenant des surfaces de contact en saillie,
• une face supérieure d'empilement de piles,
• une face inférieure d'empilement de piles,
• au moins un dispositif fournisseur de force,
dans lequel ledit répartiteur de force comprend une première et une seconde couche de répartiteur de force, chaque couche a une première et une seconde face de répartiteur de force, ladite première couche de répartiteur de force est une couche souple avec un module d'élasticité inférieur au module d'élasticité du dispositif fournisseur de force et ladite seconde couche de répartiteur de force est une couche rigide avec un module d'élasticité supérieur à la couche souple, la première couche de répartiteur de force est orientée vers l'au moins un dispositif fournisseur de force,
dans lequel ledit répartiteur de force est situé dans au moins l'une des positions suivantes : entre ladite face supérieure d'empilement de piles et ledit au moins un dispositif fournisseur de force ou entre ladite face inférieure d'empilement de piles et ledit au moins un dispositif fournisseur de force et la seconde couche de répartiteur de force comprend des surfaces de contact en saillie sur au moins la face de la seconde couche de répartiteur de force orientée vers l'empilement de piles.

2. Empilement de piles selon la revendication 1, dans lequel le module d'élasticité de la première couche de répartiteur de force est d'approximativement 10 GPa.

3. Empilement de piles selon l'une quelconque des revendications précédentes, dans lequel le module d'élasticité de la seconde couche de répartiteur de force est d'environ 140 GPa.

4. Empilement de piles selon l'une quelconque des revendications précédentes, dans lequel ledit au moins un dispositif fournisseur de force est formé d'un seul tenant avec la première couche de répartiteur de force.

5. Empilement de piles selon l'une quelconque des revendications précédentes, dans lequel les surfaces de contact en saillie correspondent à au moins l'une parmi : les surfaces d'étanchéité de l'empilement de piles ou les surfaces de contact d'interconnexion.

6. Empilement de piles selon l'une quelconque des revendications précédentes, dans lequel ladite seconde couche de répartiteur de force est électriquement conductrice.

7. Empilement de piles selon l'une quelconque des revendications précédentes, dans lequel le répartiteur de force comprend au moins l'un parmi : le silicate de calcium, une isolation microporeuse, le mica, un métal, un tapis de fibres, une fibre céramique réfractaire ou une fibre de verre, une fibre d'oxyde de magnésium-silice, une fibre d'alumine contenant une quantité de silice, des compositions à faible teneur en aluminosilicate alcalin contenant un ou plusieurs des oxydes suivants : l'oxyde de zirconium, l'oxyde de chrome ou l'oxyde de titane ou la vermiculite.

8. Empilement de piles selon l'une quelconque des revendications précédentes, dans lequel le répartiteur de force comprend au moins l'un parmi : un alliage de métaux ou une céramique.

9. Empilement de piles selon l'une quelconque des revendications précédentes, dans lequel au moins une partie dudit répartiteur de force forme un joint d'étanchéité entre ledit empilement de piles et au moins l'un parmi : un collecteur de gaz côté admission ou un collecteur de gaz côté évacuation.
